# EUROPEAN PATENT APPLICATION

(11) **EP 3 147 616 A1**
(43) Date of publication of application: **29.03.2017**
(21) Application number: 15795440.5
(22) Date of filing: 10.04.2015
(51) Int. Cl.: F28D 15/02, B01J 19/00, C09K 5/20

(54) **HEAT TRANSPORT SYSTEM**

(30) Priority: 23.05.2014 JP 2014106783
(71) Applicant: DENSO CORPORATION, Aichi-ken, 448-8661 (JP)
(72) Inventor: FUSE, Takuya, Kariya-city Aichi 448-8661 (JP); KANEKO, Takashi, Kariya-city Aichi 448-8661 (JP); KAWAGUCHI, Touru, Kariya-city Aichi 448-8661 (JP)
(74) Representative: Kuhnen & Wacker
(86) International application number: PCT/JP2015/002034
(87) International publication number: WO 2015/177964

(57) **Abstract**

A heat transfer system has a heat source (101, 201) that generates heat, a heat dissipator (102, 202) that dissipates heat, and a flow controller (103, 203) that controls a flow of a heat medium in a heat medium passage (100) in which the heat medium in a liquid state flows. The heat from the heat source (101) is transferred to the heat dissipator (102) through the heat medium. The heat medium is a solution that includes a solvent and at least one solute (40). The at least one solute (40) is configured by a molecule. The molecule has (i) a first portion (41) that selectively approaches a solid-liquid interface (50) of the solvent when a temperature of the heat medium becomes lower than or equal to a predetermined base temperature and (ii) a second portion (42) that is lyophobic and coupled with the first portion (41).

## Description

### CROSS REFERENCE TO RELATED APPLICATION

This application is based on Japanese Patent Application No. 2014-106783 filed on May 23, 2014, the disclosure of which is incorporated herein by reference.

### TECHNICAL FIELD

The present disclosure relates to a heat transfer system that transfers heat using a liquid heat medium.

### BACKGROUND ART

A heat is generated in an energy exchange in an energy exchange system, for example, in a vehicle. Generally, such system is configured such that the heat generated in the energy exchange is transferred to be dissipated from a heat dissipator to outside the system. A liquid heat medium is used as the heat medium transferring the heat in most cases, and the liquid is required to be antifreeze liquid.

Conventionally, a technique to secure an antifreeze characteristic is disclosed (e.g., refer to Patent Literature 1). According to the technique, a liquid provided by water to which ethylene glycol, as a freezing-point depressant, is added by 50 percent relative to the water is used as the heat medium. Another technique to secure an antifreeze characteristic is disclosed (e.g., refer to Patent Literature 2). According to the technique, a supercooled state of the heat medium is maintained by adding a slight amount of a surfactant agent to the heat medium.

### PRIOR ART LITERATURES

### PATENT LITERATURE

Patent Literature 1: JP 2014-020280 A
Patent Literature 2: JP 2013-032456 A

### SUMMARY OF INVENTION

According to studies by the inventors of the present disclosure, a concentration of ethylene glycol is required to be increased as a target freezing point becomes lower in a case of securing the antifreeze characteristic of the heat medium using a freezing point depression phenomenon as the technique disclosed in Patent Literature 1. However, thermophysical property such as a specific heat and a thermal conductivity deteriorates, and a viscosity of the heat medium increases when the concentration of ethylene glycol is increased. As a result, a size of the heat dissipator or a heat medium pipe may be larger, and power required to flow the heat medium may be greater.

A supercooled state of liquid is a metastable state when the supercooled state is caused in a cooling of the liquid, and thereby there is a high possibility of generating an ice nucleus due to a thermal fluctuation in the system. It is considered that the thermal fluctuation is caused due to a mechanical disturbance or a thermal disturbance in the system.

A freezing of the heat medium therefore may be advanced since the supercooled state is broken due to the disturbance, in a case of securing the antifreeze characteristic of the heat medium by advancing the supercooling as described in Patent Literature 2. The antifreeze characteristic thereby may not be secured sufficiently.

The present disclosure addresses the above-described issues, and thereby it is an objective of the present disclosure to provide a heat transfer system that can suppress a deterioration of a thermophysical property of a heat medium and an increase of a viscosity of the heat medium and that can sufficiently secure an antifreeze characteristic of the heat medium.

A heat transfer system of the present disclosure has (i) a heat source that generates heat, (ii) a heat dissipator that dissipates heat, and (iii) a flow controller that controls a flow of a heat medium in a heat medium passage in which the heat medium in a liquid state flows. The heat from the heat source is transferred to the heat dissipator through the heat medium. The heat medium is configured by a solution that includes a solvent and at least one solute. The at least one solute is configured by a molecule. The molecule has (i) a first portion that selectively approaches a solid-liquid interface of the solvent when a temperature of the heat medium becomes lower than or equal to a predetermined base temperature and (ii) a second portion that is lyophobic and coupled with the first portion.

According to the above-described configuration, the first portion of the solute selectively approaches the solid-liquid interface of the solution and is adsorbed when the temperature of the heat medium falls and becomes lower than or equal to the base temperature. The first portion adsorbing to the solid-liquid interface of the solvent blocks a growth of a solidified nucleus of the solvent, and thereby an advance of a freezing can be suppressed. Moreover, the second portion that is lyophobic prevents the solvent from approaching the solid-liquid interface, and thereby the advance of the freezing can be suppressed more certainly.

As a result, the advance of the freezing of the heat medium can be delayed, i.e., the freezing point of the heat medium can be lower without adding a freezing-point depressant such as ethylene glycol to the heat medium. In addition, it is unnecessary to maintain a supercooled state to decrease the freezing point of the heat medium, and thereby a freezing that is advanced by a disturbance breaking the supercooled state of the heat medium is suppressed. The deterioration of the thermophysical property and the increase of the viscosity of the heat medium thus can be suppressed, and the antifreeze characteristic of the heat medium can be secured sufficiently.

### BRIEF DESCRIPTION OF DRAWINGS

FIG. 1 is a diagram illustrating a configuration of an engine cooling system as a whole according to a first embodiment.
FIG. 2 is an explanatory diagram to explain a configuration of a heat medium according to the first embodiment.
FIG. 3 is a graph showing a relation between a molecular weight of a solute of the heat medium and a freezing temperature.
FIG. 4 is a graph showing a relation between a concentration of the solute in the heat medium and the freezing temperature.
FIG. 5 is a graph showing a relation between a heat transfer ratio on liquid side relative to a concentration of ethylene glycol in a cooling water and the freezing temperature.
FIG. 6 is a diagram illustrating a configuration of an engine cooling system as a whole according to a second embodiment.

### DESCRIPTION OF EMBODIMENTS

Embodiments of the present disclosure will be described hereafter referring to drawings. In the embodiments, a part that corresponds to or equivalents to a matter described in a preceding embodiment may be assigned with the same reference number.

### (First Embodiment)

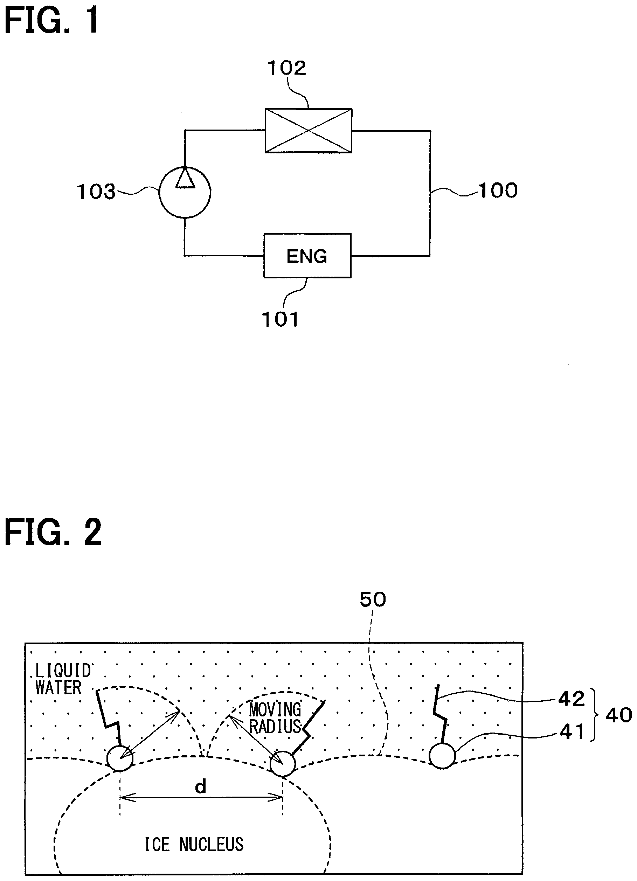

A first embodiment will be described hereafter referring to FIG. 1 through FIG. 5. A heat transfer system according to the present disclosure is used in a cooling system for an engine (i.e., an internal combustion engine) used as a driving source for moving a hybrid vehicle, in the present embodiment.

As shown in FIG. 1, the engine cooling system of the present embodiment is a system that cools cooling water for an engine 101 in a radiator 102. That is, the engine cooling system of the present embodiment is a system that transfers heat from the engine 101 to the radiator 102 through the cooling water that is a heat medium in a liquid state.

The engine 101 is a heat source that generates heat by an energy exchange. The radiator 102 is a heat exchanger that exchanges heat with an exhaust heat of the engine 101 and cools the cooling water having a high temperature by performing a heat exchange between the cooling water and outside air.

The engine 101 and the radiator 102 are connected to each other by a cooling water passage 100 that configures a closed circuit between the engine 101 and the radiator 102. The cooling water passage 100 is provided with a pump 103, and the pump 103 is mechanically driven by power of the engine 101 and circulates the cooling water in the cooling water passage 100. The cooling water in the cooling water passage 100 flows from a cooling water outlet of the engine 101 to a cooling water inlet of the engine 101 through the radiator 102.

The cooling water passage 100 is a heat medium passage that configures a passage in which the cooling water as the heat medium in the liquid state flows. The pump 103 is a flow controller that controls a flow of the cooling water in the cooling water passage 100.

The following is a description about the cooling water used in the engine cooling system according to the present embodiment. The cooling water of the present embodiment is a solution including a solvent and at least one solute 40.

As shown in FIG. 2, the solute 40 of the cooling water is configured by a molecular having a head 41 as a first portion and a tail 42 as a second portion. The head 41 is a portion that selectively approaches a solid-liquid interface 50 of the solvent when a temperature of the cooling water becomes lower than or equal to a predetermined base temperature. The tail 42 is a portion that is lyophobic relative to the solvent and coupled with the head 41.

According to the present embodiment, the solvent is water. The head 41 of the solute 40 is one of a quaternary ammonium group, a sulfo group, an ester group, a carboxyl group and a hydroxyl group. The tail 42 of the solute 40 has a main chain configured by carbons. A quantity of hydrophilic groups coupled with the carbons configuring the main chain is less than or equal to four.

Specifically, the solute 40 of the present embodiment is a chemical compound that has a trimethylammonium group as the head 41 and a linear hydrocarbon group, as the tail 42, having less than or equal to sixteen carbons. The solute 40 is a hexadecyltrimethylammonium bromide (i.e., C16TAB).

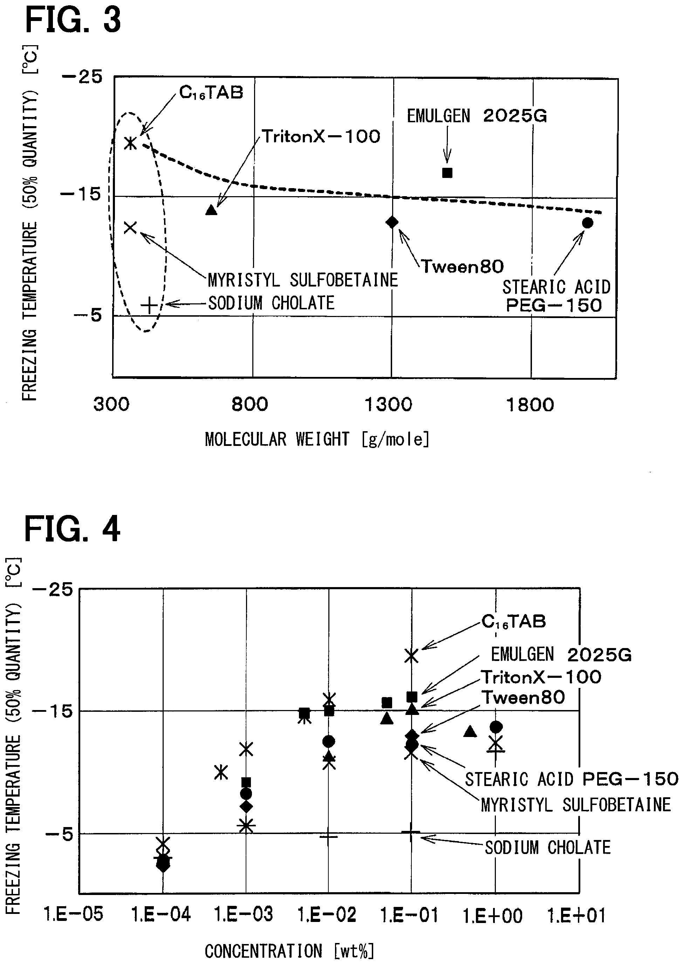

The solute 40 of the present embodiment is not limited to be C16TAB and may be polyoxyethylene (10) octylphenylether (i.e., Triton (registered trademark) X-100), polyoxyethylene (25) octyldodecylether (i.e., Emulgen (registered trademark) 2025G), polyoxyethylene sorbitan monooleate (i.e., Tween (registered trademark) 80), stearic acid PEG-150, myristyl sulfobetaine, or sodium cholate as shown in FIG. 3. A freezing temperature can be lower as shown in FIG. 3 by using the above-listed chemical compounds as the solute 40.

In the solute 40, C16TAB does not have a hydrophilic group, myristyl sulfobetaine has one hydrophilic group, and sodium cholate has three hydrophilic groups. As shown in FIG. 3 with an area surrounded by a dashed line, freezing temperatures of sodium cholate, myristyl sulfobetaine, and C16TAB becomes lower in this order. The freezing temperature therefore can be reduced as a quantity of hydrophilic groups is reduced. Specifically, as described above, the freezing temperature can be low by designing the tail 42 of the solute 40 to include less than or equal to four of hydrophillic groups.

A concentration of the solute 40 in the cooling water is smaller than a saturated dissolved concentration of the solute 40 relative to water. A growth of a piece of ice, which is caused when the solute 40 recrystallizes and provides a crystal working as a nucleus of the ice, thereby can be suppressed. Furthermore, a concentration of the solute 40 in the cooling water is smaller than or equal to a critical micelle concentration of the solute 40 relative to water. A growth of a piece of ice, which is caused when the solute 40 becomes micelle and provides a nucleus of the ice, thereby can be suppressed.

As shown in FIG. 4, the freezing temperature falls as a weight percent of the solute 40 relative to water increases while the weight percent is being lower than or equal to 0.1. The freezing temperature gradually rises when the weight percent of the solute 40 relative to water exceeds 0.1. The weight percent of the solute 40 relative to water is thereby set to be lower than or equal to 0.1 according to the present embodiment.

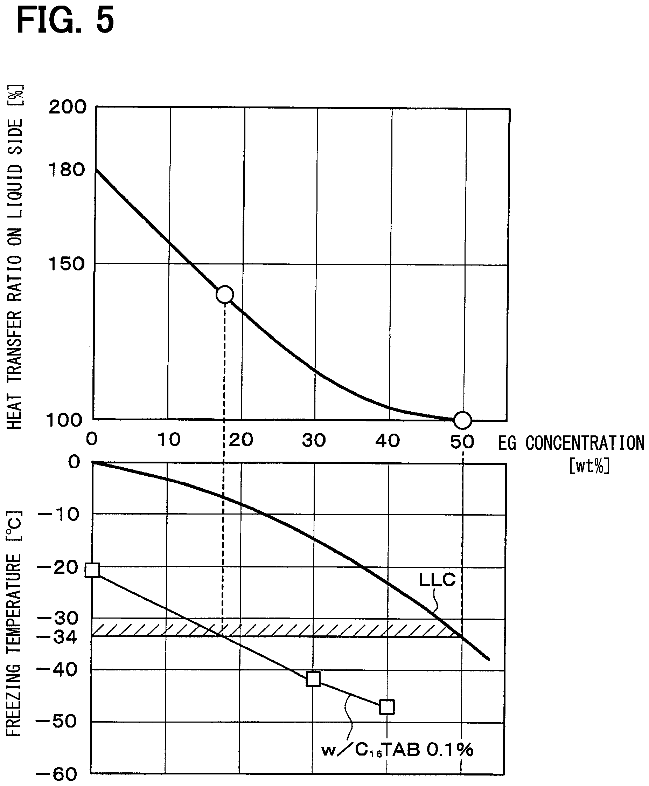

A relation of a heat transfer coefficient ratio on a liquid side and the freezing temperature relative to the ethylene glycol concentration in the cooling water is shown in Fig. 5. The heat transfer ratio on the liquid side shown by a vertical axis of the upper graph of two graphs of FIG. 5 is a value of the heat transfer coefficient on the liquid side when expressing the heat transfer coefficient ratio of LLC (ethylene glycol concentration: 50%) as 100%. LLC is generally used recent years.

The freezing temperature is required to be lower than or equal to minus 34 °C to secure a property of an antifreeze liquid defined in JIS K 2234. LLC widely used in recent years thus includes ethylene glycol by 50 % relative to water.

As shown by the upper graph in FIG. 5, a heat transfer coefficient increases as the concentration of ethylene glycol relative to water in the cooling water falls. However, the freezing temperature rises as the concentration of ethylene glycol relative to water in the cooling water falls, as shown by the lower graph of the two graphs of FIG. 5.

In contrast, the freezing temperature becomes minus 20 °C in a case of using, as the cooling water, C16TAB of which weight percent is 0.1. The concentration of ethylene glycol in the cooling water is 0, and therefore the heat transfer coefficient can be increased.

However, as described above, the freezing temperature is required to be lower than or equal to minus 34 °C to secure a property of an antifreeze liquid defined in JIS K 2234. The present embodiment thus uses a second solute other than C16TAB that is used as a first solute. The second solute is different from C16TAB and depresses a freezing point of water by dissolving in the water. The second solute may be alcohol. The second solute of the present embodiment is ethylene glycol.

As shown in the lower graph of FIG. 5, a freezing concentration can be depressed by adding ethylene glycol to a C16TAB water solution. A concentration of ethylene glycol relative to the cooling water is preferably higher than or equal to 10 weight percent and lower than or equal to 40 weight percent.

More specifically, the freezing temperature can be minus 34 oC by designing the weight percent of ethylene glycol to be about 18 % in a case of using, as the cooling water, C16TAB of which weight percent is 0.1. At this time, the heat transfer coefficient can be increased by about 40 percent as compared to LLC that is widely used in recent years.

As described above, the solute 40 in the cooling water is configured by a molecule that has the head 41 and the tail 42. The head 41 selectively approaches the solid-liquid interface 50 of the solvent when a temperature of the cooling water becomes lower than or equal to the predetermined base temperature. The tail 42 is a portion that is lyophobic relative to the solvent (i.e., has a lyophobic characteristic) and coupled with the head 41. According to the above-described configuration, the head 41 of the solute 40 selectively approaches to the solid-liquid interface of the solution and is adsorbed when the temperature of the cooling water falls and becomes lower than or equal to the base temperature. The head 41 adsorbing to the solid-liquid interface 50 of the solvent blocks a growth of an ice nucleus (i.e., a solidified nucleus) of the solvent, and thereby an advance of a freezing can be suppressed. Moreover, the tail 42 that is lyophobic relative to the solvent prevents the solvent from approaching the solid-liquid interface 50, and thereby the advance of the freezing can be suppressed more certainly.

As a result, the advance of the freezing of the cooling water can be delayed, i.e., the freezing point of the cooling water can be decreased without adding a freezing-point depressant (e.g., ethylene glycol) to the coolant. Both of a deterioration of thermophysical property and an increase of a viscosity of the cooling water thereby can be suppressed.

In addition, it is unnecessary to maintain a supercooled state to decrease the freezing point of the cooling water. That is, the solute 40 in the cooling water of the present embodiment does not promote a supercooling, but blocks a growth of the ice nucleus as described above. A freezing therefore is not advanced by a disturbance breaking the supercooled state of the cooling water.

As described above, the deterioration of the thermophysical property and the increase of the viscosity of the cooling water thus can be suppressed, and the antifreeze characteristic of the cooling water can be secured sufficiently according to the present embodiment.

In the cooling water of the present embodiment, the tail 42 moves around the head 41 when the head 41 of the solute 40 adsorbs to the solid-liquid interface 50 of the solvent, as shown in FIG. 2. In this occasion, tails 42 of adjacent two solute molecules are designed not to be in contact with each other. A distance between the adjacent two solute molecules thereby increases since a moving radius increases when a length of the tail 42 of the solute molecule is too long. As a result, it may be difficult to block the growth of the ice nucleus in the solvent, and a suppression effect to suppress the advance of the freezing of the cooling water may deteriorate.

In contrast, the length of the tail 42 can be prevented from being too long by configuring the tail 42 of the solute molecule with the linear hydrocarbon group having less than or equal to sixteen carbons as described above. A distance d between adjacent two of the solute molecules thereby can be shortened, and the advance of the freezing of the cooling water can be suppressed certainly, since it is easy to suppress the growth of the ice nucleus in the solvent.

### (Second Embodiment)

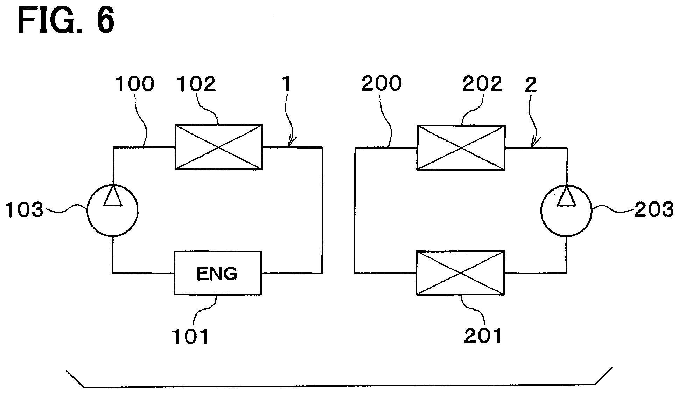

A second embodiment will be described hereafter referring to FIG. 6. The second embodiment is different from the first embodiment in a point that the heat transfer system has two heat transfer circuits 1, 2 that are independent from each other.

As shown in FIG. 6, the heat transfer system of the present embodiment has the engine cooling system of the first embodiment and further has an intake air cooling system that cools an intake air for the engine. Specifically, the heat transfer system of the present embodiment has a first heat transfer circuit 1 that configures the engine cooling system and a second heat transfer circuit 2 that configures the intake air cooling system.

The first heat transfer circuit 1 is provided with the engine 101, the radiator 102, and the first pump 103 as described in the first embodiment. The first heat transfer circuit 1 is configured such that heat from the engine 101 is transferred to the radiator 102 through a first cooling water flowing in the first cooling water passage 100.

The second heat transfer circuit 2 is provided with an intercooler 201, a chiller 202, and a second pump 203. The intercooler 201 is a heat exchanger that cools the intake air by performing a heat exchange between the intake air for the engine and a second cooling water flowing in a second cooling water passage 200. The chiller 202 is a heat exchanger that cools the second cooling water by performing a heat exchange between the second cooling water and the outside air. The second pump 203 controls a flow of the second cooling water in the second cooling water passage 200. The second heat transfer circuit 2 is configured such that heat from the intercooler 201 is transferred to the chiller 202 through the second cooling water flowing in the second cooling water passage 200.

The first cooling water and the second cooling water of the present embodiment is "the cooling water" described in the first embodiment. The present embodiment thus can provide the same effects as the first embodiment.

### (Other Modifications)

It should be understood that the present disclosure is not limited to the above-described embodiments and intended to cover various modification within a scope of the present disclosure as described hereafter.
(1) The above-described embodiments are an example of using the engine 101 as a heat source, however the heat source is not limited to be the engine. For example, the heat source may be a fuel cell, a battery, or an inverter.
(2) The above-described embodiments are an example of using the radiator 102 as the heat dissipator, however the heat dissipator is not limited to be the radiator. For example, the heat dissipator may be a heater core that heats an air for air conditioning by performing a heat exchange between the cooling water and the air.

## Claims

1. A heat transfer system comprising:
a heat source (101, 201) that generates heat;
a heat dissipator (102, 202) that dissipates heat; and
a flow controller (103, 203) that controls a flow of a heat medium in a heat medium passage (100) in which the heat medium in a liquid state flows, wherein
the heat from the heat source (101) is transferred to the heat dissipator (102) through the heat medium,
the heat medium is configured by a solution that includes a solvent and at least one solute (40), and
the at least one solute (40) is configured by a molecule, and the molecule has:
a first portion (41) that selectively approaches a solid-liquid interface (50) of the solvent when a temperature of the heat medium becomes lower than or equal to a predetermined base temperature; and
a second portion (42) that is lyophobic and coupled with the first portion (41).

2. The heat transfer system according to claim 1, wherein
the heat source (101, 201) has at least two of a first heat source (101) and a second heat source (201),
the heat dissipator (102, 202) has at least two of a first heat dissipator (102) and a second heat dissipator (202),
the flow controller (103, 203) has at least two of a first flow controller (103) and a second flow controller (203), and
a first heat transfer circuit (1) having the first heat source (101), the first heat dissipator (102) and the first flow controller (103) is independent from a second heat transfer circuit (2) having the second heat source (201), the second heat dissipator (202) and the second flow controller (203).

3. The heat transfer system according to claim 1 or 2, wherein
the solvent is water, and
the first portion (41) of the solute (40) is one of a quaternary ammonium group, a sulfo group, an ester group, a carboxyl group and a hydroxyl group.

4. The heat transfer system according to any one of claims 1 to 3, wherein
the solvent is water, and
the second portion (42) of the solute (40) has a main chain configured by carbons and has less than or equal to four of hydrophilic groups coupled with the carbons.

5. The heat transfer system according to any one of claims 1 to 3, wherein
a concentration of the solute (40) in the heat medium is smaller than a saturated dissolved concentration of the solute (40) relative to the solution.

6. The heat transfer system according to any one of claims 1 to 3, wherein
a concentration of the solute (40) in the heat medium is smaller than or equal to a critical micelle concentration of the solute (40) relative to the solution.

7. The heat transfer system according to any one of claims 1 to 6, wherein
the heat medium has:
the first solute (40) that is configured by the molecule having the first portion (41) and the second portion (42); and
a second solute that is different from the first solute and depresses a freezing point of the solvent by dissolving in the solvent.

8. The heat transfer system according to claim 7, wherein
the solvent is water, and
the second solute is alcohol.

9. The heat transfer system according to claim 8, wherein
a concentration of the first solute (40) relative to the water is smaller than or equal to 0.1 weight percent, and
a concentration of the second solute relative to the solution is larger than or equal to 10 weight percent and smaller than or equal to 40 weight percent.

10. The heat transfer system according to claim 9, wherein
the first portion (41) of the first solute (40) is a trimethylammonium group,
the second portion (42) of the first solute (40) is a linear hydrocarbon group having less than or equal to sixteen carbons, and
the second solute is an ethylene glycol.
